# EUROPEAN PATENT APPLICATION

(11) **EP 3 462 281 A1**
(43) Date of publication of application: **03.04.2019**
(21) Application number: 17193465.6
(22) Date of filing: 27.09.2017
(51) Int. Cl.: G06F 3/01

(54) **TECHNIQUE FOR DYNAMICALLY TRANSFORMING A PHYSICAL ENVIRONMENT OF A USER TO EMULATE A VIRTUAL ENVIRONMENT**

(71) Applicant: Siemens Aktiengesellschaft, 80333 München (DE)
(72) Inventor: Wilde, Robert, 81379 München (DE)

(57) **Abstract**

The technique includes a rod matrix having a plurality of rods stacked parallel to each other, an actuator arrangement, a virtual reality system and a control unit. Each rod has a rod surface perpendicular to a longitudinal axis of the rod. All the rod surfaces when arranged adjacently form a default level plane. Each rod is independently moveable, by the actuator arrangement, such that the rod surface of the rod moves from the default level plane to different positions along the longitudinal axis by corresponding translation motions of the rod. The virtual reality system provides information, e.g. a heightmap, to the control unit regarding the virtual environment. The control unit using the information determines a desired position for each rod surface of one or more rods and instructs the actuator arrangement to perform the corresponding translation motions of the rods. The rod surfaces at different positions resemble the virtual environment.

## Description

The present technique relates to techniques for virtual reality, and more particularly to techniques for dynamically transforming a physical environment of a user experiencing virtual reality to emulate a virtual environment.

Virtual reality (VR) is a technology that uses Virtual reality headsets usually in form of a Head Mounted VR Display (HMD) on a user i.e. a person, to simulate the user's physical presence in a virtual or imaginary environment. The user using the HMD is able to look around the artificial world i.e. the virtual environment and move about in the virtual environment and interact with features or items present in the virtual environment. The user is represented in the virtual environment by a virtual representation of the user often referred to as an avatar. The virtual representation of the user i.e. the avatar moves around different scenes in the virtual environment and interacts with the different items. For example a user who is physically present in a room by help of the HMD may experience being present on an uphill road that the user's virtual representation can walk on to reach a scenic point in the virtual environment. The user may be immersed further in the VR experience if the user is able to walk on a real space i.e. a real floor with a similar rate of elevation as the uphill road at the same time when the user's virtual representation is walking uphill in the virtual environment.

Virtual reality also refers to remote communication environments which provide a virtual presence of users through telepresence and telexistence in the virtual environment. The user may further be immersed in the VR experience if the user is able to interact with the real world objects present around the user while the user's virtual representation is interacting with the items in the virtual environment.

Thus to enhance the user's immersive experience of the virtual reality, the physical space around the user may be used for example by making the user walk on an elevating floor or by making the user sit on a surface that provides same haptic experience as a virtual chair on which the user's virtual representation is sitting on. This increases the user's immersive experience by including in the user's virtual reality experience the haptic sensation perceived by the user's physical interaction with the real space around the user. However, since the virtual reality environment changes dynamically the physical space around the user is difficult to be shaped corresponding to items or scenes in the virtual environment. Thus there exists a need to provide a technique that allows dynamically altering the real space around the user, for example a floor or wall in the vicinity of the user, to emulate the scene or items that the user is viewing in the virtual environment and thereby to at least match the user's real world haptic experience to the user's virtual experience.

Therefore, it is an object of the present invention is to provide a technique that allows dynamically altering or transforming a real space around a user experiencing virtual environment, i.e. dynamically transforming a physical environment of the user, to emulate the virtual environment i.e. to emulate scene or items that the user is viewing in the virtual environment.

The abovementioned object is achieved by a system according to claim 1 of the present technique, a method according to claim 7 of the present technique, a computer-readable storage media according to claim 11 of the present technique and a computer program according to claim 12 of the present technique. Advantageous embodiments of the present technique are provided in dependent claims.

In a first aspect of the present technique a system for dynamically transforming a physical environment of a user to emulate a virtual environment is presented. The system includes a rod matrix, an actuator arrangement, a virtual reality system and a control unit.

The rod matrix includes a plurality of rods. Each rod has a longitudinal axis and a rod surface substantially perpendicular to the longitudinal axis. The rods are stacked adjacent to each other such that longitudinal axes of the rods are disposed substantially parallel to each other. The rod surfaces of the rods when arranged adjacent to each other form a default level plane, for example a flat surface like a flat floor. Each rod is configured to be independently moveable, i.e. independent of the other rods of the matrix, such that the rod surface of the rod moves from the default level plane to different positions along the longitudinal axis of the rod by corresponding translation motions of the rod along the longitudinal axis of the rod. Thus by the translational motion, the rod surface is raised above the default level plane or lowered below the default level plane.

The actuator arrangement independently moves each rod to perform the translation motion of the rod along the longitudinal axis of the rod. The virtual reality system, for example head mounted virtual reality device or a computer system running the virtual reality application provides information to the control unit regarding the virtual environment. The information is a height map of the virtual environment, or to be more particular heightmap of a scene of the virtual environment that the user is experiencing at a given point in time or that the user is about to experience. An example of the heightmap may be a grayscale height elevation map.

The control unit receives the information from the virtual reality system and determines based on the information so received a desired position for each rod surface of one or more of the rods out of all the rods of the rod matrix or in other words of a subset of the rods of the rod matrix. The control unit thereafter instructs the actuator arrangement to perform the corresponding translation motion of the one or more of the rods. As a result in the rod matrix the rods, and particularly the rod surfaces, are at different positions thereby resembling the virtual environment, for example resembling a contour of the virtual environment, i.e. of the scene or any item in the virtual environment.

The user is physically present on the rod matrix of the present technique where the rods initially may all be arranged such that the rod surfaces aligned next to each other form a flat surface, i.e. the default level plane. Thereafter say the user starts the virtual reality experience and is subjected to a virtual environment for example an uphill road that the user's virtual representation can walk on to reach a scenic point in the virtual environment. Then according to the present invention the virtual reality system provides the control unit with the information about the virtual environment i.e. say elevations of the uphill road in form of a heightmap which then is used by the control unit to determine the desired positions for the rod surfaces such that the rod surfaces aligned next to each other at different desired positions form a surface that emulates the uphill road. The rods are moved by the actuator arrangement to place different rod surfaces at their respective desired positions according to the heightmap.

The rod matrix i.e. the physical environment of the user is dynamically altered or transformed to emulate the scene or items that the user is viewing in the virtual environment and thereby the user's haptic experience generated from the altered or transformed physical environment at least partially corresponds to the user's virtual experience of the virtual environment.

In an embodiment of the system, the actuator arrangement includes a plurality of actuators. A number of actuators is equal to a number of rods in the rod matrix and each actuator is functionally coupled to one of the unique rods. The one or more actuators are one of pneumatic, hydraulic, electric and magnetic.

In another embodiment of the system, the system includes one or more sensors configured to determine a position of the user with respect to the rod matrix, i.e. where in the rod matrix or on the rod matrix the user is. The sensors provide positional information of the user, i.e. information regarding the position of the user with respect to the rod matrix, to the control unit. The control unit thereafter determines based on the positional information the desired position for each rod surface of one or more of the rods in a vicinity of the user and instructs the actuator arrangement to perform the corresponding translation motion of the one or more of the rods in the vicinity of the user. Thus the rods in the vicinity of the user are altered or dynamically transformed thereby making the system more efficient as it does not need to alter all the rods of the rod matrix.

In a second aspect of the present technique, a method for dynamically transforming a physical environment of a user to emulate a virtual environment is presented. The method is implemented using a system according to the first aspect of the present technique. In the method virtual reality rendering data is provided by the virtual reality system to the user. The virtual reality rendering data creates the virtual environment that the user is experiencing. At the same time information regarding the virtual environment is provided to the control unit. The information is a heightmap, for example a grayscale height elevation map, of the virtual environment. Thereafter in the method based on the information so received a desired position for each rod surface of one or more of the rods is determined by the control unit. Finally in the method, the actuator arrangement is instructed by the control unit to perform the corresponding translation motion of the one or more of the rods such that the rod matrix emulates the virtual environment.

In an embodiment of the method, the method further includes determining, by one or more sensors, a position of the user with respect to the rod matrix. In this embodiment of the method, determining, by the control unit, based on the information received the desired position for each rod surface of one or more of the rods includes determining based on the positional information the desired position for each rod surface of one or more of the rods in a vicinity of the user. Furthermore, in this embodiment of the method, instructing the actuator arrangement to perform the corresponding translation motion of the one or more of the rods such that the rod matrix emulates the virtual environment includes instructing the actuator arrangement to perform the corresponding translation motion of the one or more of the rods in the vicinity of the user.

In a third aspect of the present technique, a computer-readable storage media is presented. The computer-readable storage media has stored thereon:
- instructions executable by one or more processors of a computer system, wherein execution of the instructions causes the computer system to perform the method according to the second aspect of the present technique.

In a fourth aspect of the present technique, a computer program is presented which is being executed by one or more processors of a computer system and performs the method according to the second aspect of the present technique.
The present technique is further described hereinafter with reference to illustrated embodiments shown in the accompanying drawing, in which:
- FIG 1: schematically represent an exemplary embodiment of a system of the present technique depicting a rod matrix;
- FIG 2: schematically represents an exemplary embodiment of a rod of the rod matrix;
- FIG 3: schematically represents a top view of an exemplary embodiment of the rod matrix;
- FIG 4: schematically represents a top view of another exemplary embodiment of the rod matrix;
- FIG 5: schematically represents an exemplary embodiment of the system of the present technique at an instance of time;
- FIG 6: schematically represents an exemplary embodiment of the system of the present technique at another instance of time subsequent to the instance of time of FIG 5;
- FIG 7: schematically represents an exemplary embodiment of working of the system of the present technique;
- FIG 8: schematically represents a scheme for generating information regarding a virtual environment;
- FIG 9: schematically represents information generated regarding the virtual environment of FIG 8;
- FIG 10: schematically represent another exemplary embodiment of the system of the present technique; and
- FIG 11: depicts a flow chart representing a method of the present technique.

Hereinafter, above-mentioned and other features of the present technique are described in details. Various embodiments are described with reference to the drawing, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

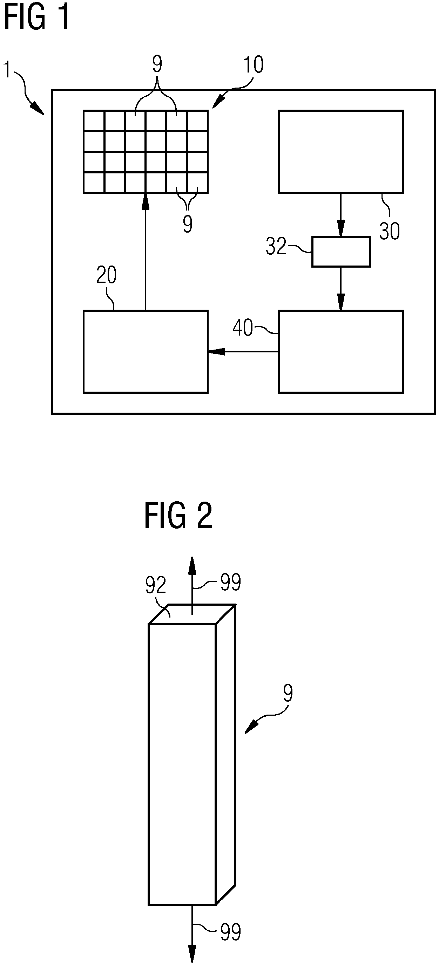

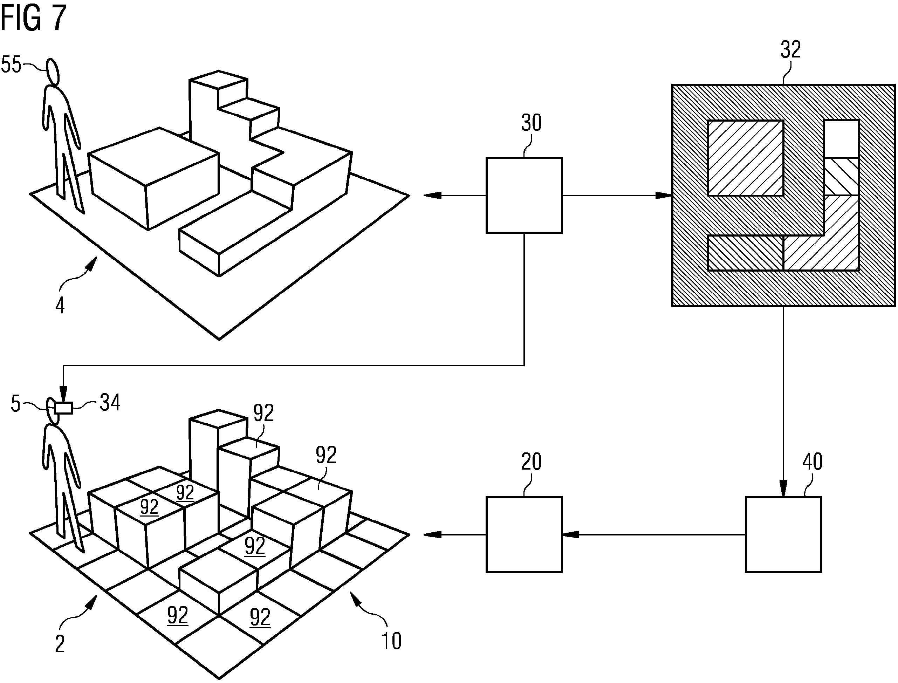

FIGs 1 and 7, respectively, show a system 1 and working of the system 1 for dynamically transforming a physical environment 2 of a user 5 to emulate a virtual environment 4, in accordance with aspects of the present technique. The virtual environment 4 may be a virtual scene or an item or feature in the virtual environment 4. A virtual representation 55, i.e. for example an avatar, of the user 5 is present in the virtual environment 4. The system 1 includes a rod matrix 10, an actuator arrangement 20, a virtual reality system 30 and a control unit 40.

The rod matrix 10 forms the physical environment 2 in which the user 5 is present. The user 5 is physically present in the physical environment 2 i.e. on the rod matrix 10. The user 5 experiences the virtual reality i.e. the virtual environment 4 via head mounted virtual reality display 34, hereinafter also referred to as the HMD 34. The HMD 34 may be connected to the virtual reality system 30 for example a computer running the virtual reality (VR) application and related VR service. Alternatively (not shown) the HMD 34 may comprise the virtual reality system 30, hereinafter also referred to as the VR system 30, which may be a processor built into the HMD 34. The VR system 30 renders data that composes or created the virtual environment 4 for the user 5.

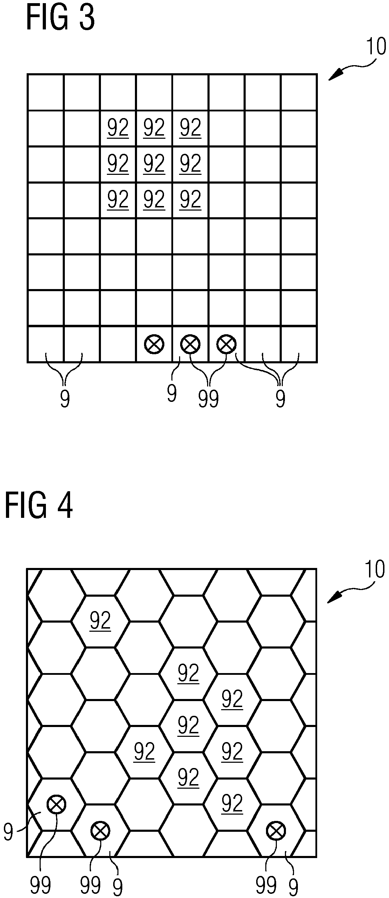

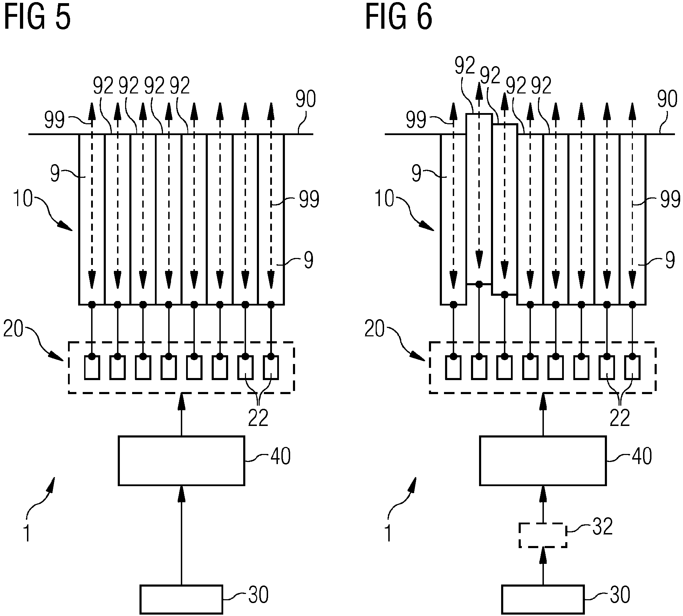

The rod matrix 10 includes a plurality of rods 9. One such rod 9 is shown in FIG 2. Each rod 9 has a longitudinal axis 99 and a rod surface 92 substantially perpendicular to the longitudinal axis 99. A length of the rod 9 may be for example between 10 cm and 150 cm, and an area of the rod surface 92 may be for example between 0.5 square cm and 5 square cm. The rods 9 may be hollow or solid and may be formed of a metallic or polymeric material. The rods 9 are stacked adjacent to each other. The stacking of the rods 9, i.e. the arrangement of the plurality of the rods 9, is depicted in FIGs 3 and 4 that represent a top view of the rod matrix 10, and is also depicted in FIGs 5 and 6 that represent a side view of the rod matrix 10.

As shown in FIGs 3 to 5 the rods 9 are stacked or packed closely to one another or piled such that longitudinal axes 99 of the rods 9 are disposed substantially parallel to each other. The rod surfaces 92 of the rods 9 when arranged adjacent to each other form a default level plane 90, for example a flat surface like a flat floor on which the user 5 may be present i.e. on which the user 5 may stand or sit or lay down. The rods 9 may have different shapes, for example, but not limited to, a cuboidal shape as shown in FIGs 2 and 3 or a hexagonal prism shape as shown in FIG 4, or cylindrical shape (not shown), a triangular prism (not shown), and so on and so forth. Dimension of a planar area, i.e. of the default level plane 90, of the rod matrix 10 formed by the rod surfaces 92 of all the rods 9 may be for example 10 m (meter) in length and 10 m in breadth, or 20 m in length and 15 m in breadth, and so on and so forth.

As shown in FIGs 5 and 6, each rod 9 is independently moveable, i.e. independent of the other rods 9 of the rod matrix 10, such that the rod surface 92 of the rod 9 moves from the default level plane 90 to different positions along the longitudinal axis 99 of the rod 9 by corresponding translation motions of the rod 9 along the longitudinal axis 99 of the rod 9. FIG 5 shows an instance of time when all the rods 9 are arranged in their default position and thus the rod surfaces 92 of the rods 9 form the default level plane 90. The actuator arrangement 20 independently moves each rod 9 to perform the translation motion of the rod 9 along the longitudinal axis 99 of the rod 9. The actuator arrangement 20 may include a plurality of actuators 22. In one embodiment of the system 1, as depicted in FIGs 5 and 6, a number of actuators 22 in the plurality of actuators 22 is equal to a number of rods 9 in the rod matrix 10. Each actuator 22 is functionally coupled to one unique rod 9. The actuators 22 may be, but not limited to, a pneumatic actuator, a hydraulic actuator, an electrical actuator such as an electric motor and a magnetic actuator.

FIG 6, in comparison to FIG 5, depicts two rods 9 that have been subjected to translational motion by the corresponding actuators 22 along the translation axis 99 of the respective rods 9, and thus the rod surfaces 92 of those two rods 9 are at different positions as compared to the default level plane 90. Thus by the translational motion, the rod surface 92 of any of the rods 9 is raised above the default level plane 92. The actuator arrangement 20, particularly the actuators 22, may also perform a reverse translational motion on the respective rod 9 to bring the rod surface 92 back to the default level plane 90. Alternatively, the actuator arrangement 20, particularly the actuators 22, may also perform a further translational motion on the respective rod 9 to further raise the rod surface 92 from the default level plane 90. Furthermore, when at the default level plane 90, the actuator arrangement 20, particularly the actuators 22, may perform a translational motion on the respective rod 9 to lower the rod surface 92 beneath the default level plane 90. Thus by action of the actuator arrangement 20, the rod surfaces 92 of the rods 9 may be moved above or beneath the default level plane 90, and thus a landscape of the rod matrix 10 may be changed or transformed from a flat surface as shown in FIG 5 to a features surface as shown in FIG 6.

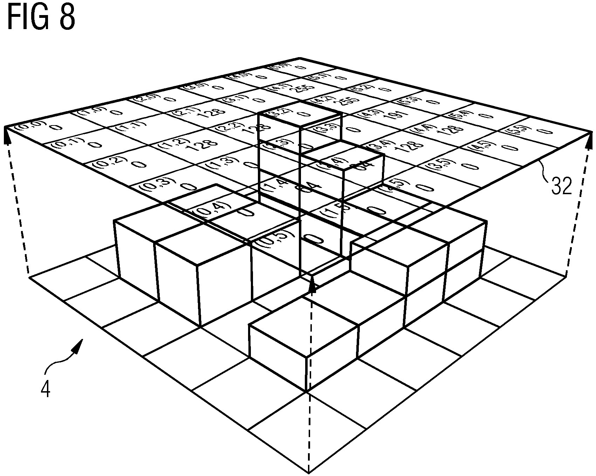

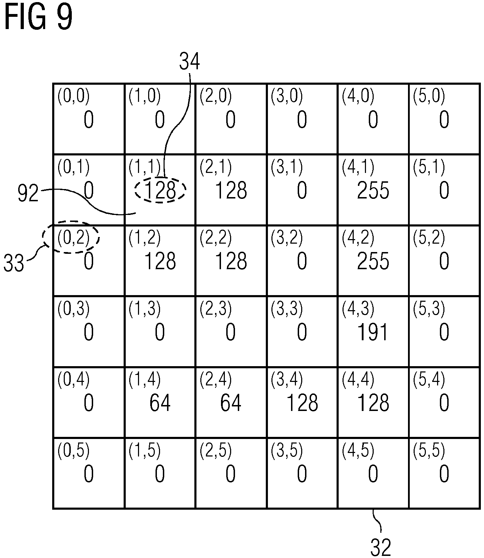

As shown in FIG 6 and 7, in combination with FIG 1, the VR system 30 running the virtual reality application provides information 32 to the control unit 40 regarding the virtual environment 4. The information 32, as shown in FIGs 7, 8 and 9 is a heightmap of the virtual environment 4, or to be more particular heightmap of a scene of the virtual environment 4 that the user is experiencing at a given point in time or that the user is about to experience. An example of the heightmap may be a grayscale height elevation map as shown in FIG 7. As shown in FIG 8 and 9, the position of each of the rods 9 of the rod matrix 10 may be represented in the information 32 in form of a coordinate 33. Furthermore, elevation data 34, which may be represented in grayscale or in numerical values may be correlated or linked with the coordinates 33 of the rods 9.

The control unit 40 receives the information 32 from the VR system 30 and determines based on the information 32 so received a desired position for each rod surface 92 of one or more of the rods 9 out of all the rods 9 of the rod matrix 10 or in other words of a subset of the rods 9 of the rod matrix 10. The control unit 40 thereafter instructs the actuator arrangement 20, and particularly the actuators 22, to perform the corresponding translation motion of the one or more of the rods 9 of the rod matrix 10. As a result in the rod matrix 10 the rods 9, and particularly the rod surfaces 92, are at different positions thereby resembling the virtual environment 4, for example resembling a contour or landscape features or objects such as chair or table of the virtual environment 4.

The user 5 is physically present on the rod matrix 10 of the present technique where the rods 9 initially may all be arranged such that the rod surfaces 92 aligned next to each other form a flat surface, i.e. the default level plane 90. Thereafter say the user starts the virtual reality experience and is subjected to the virtual environment 4 for example an uphill road that the user's virtual representation 55 can walk on to reach a scenic point in the virtual environment 4. Then according to the present invention the VR system 30 provides the control unit 40 with the information 32 about the virtual environment 4 i.e. say elevations of the uphill road in form of the heightmap shown in FIGs 7, 8 and 9 which then is used by the control unit 40 to determine the desired positions for the rod surfaces 92 such that the rod surfaces 92 aligned next to each other at different desired positions form a surface on the rod matrix 10 that emulates the uphill road. The rods 9 are moved by the actuator arrangement 20 to place different rod surfaces 92 at their respective desired positions according to the heightmap 32. Thus the rod matrix 10 i.e. the physical environment 2 of the user 5 is dynamically altered or transformed to emulate the scene or items that the user 5 is viewing in the virtual environment 4 and thereby the user's haptic experience generated from the altered or transformed physical environment 2 at least partially corresponds to the user's virtual experience of the virtual environment 4.

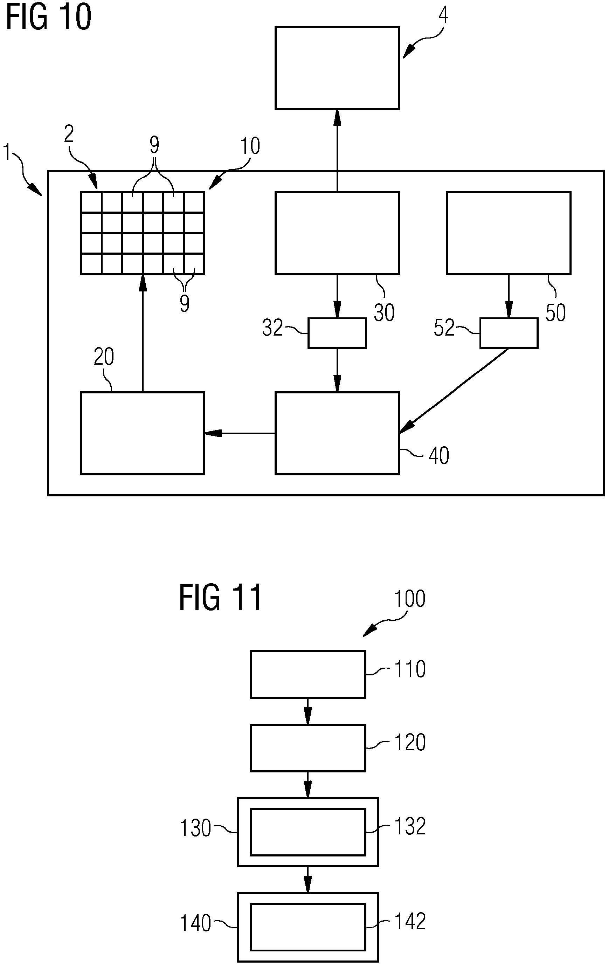

As shown in FIG 10, in another embodiment of the system 1, the system 1 includes one or more sensors 50. The sensors 50 track position of the user 5 in the rod matrix 10, or in other words the sensors 50 determine a position of the user 5 with respect to the rod matrix 10, i.e. where in the rod matrix 10 or on the rod matrix 10 the user 5 is present. Since the position of the individual rods 9 in the rod matrix 10 is known, the position of the user 5 in the rod matrix 10 also provides the position of the user 5 with respect to each of the rods 9 of the rod matrix 10. The sensors 50 are indoor positioning system that locates the user 5 with respect to the rod matrix 10 by using radio waves, magnetic fields, acoustic signals, or other sensory information. The components and functioning of the indoor positioning systems are well known and therefore not described herein in details for sake of brevity.

The sensors 50 provide positional information 52 of the user 5, i.e. information regarding the position of the user 5 with respect to the rod matrix 10, to the control unit 40 as shown in FIG 10. Alternatively (not shown), the sensors 50 provide positional information 52 of the user 5, i.e. information regarding the position of the user 5 with respect to the rod matrix 10, to the VR system 30 which then includes the positional information 52 in the information 32 provided to the control unit 40. The control unit 40 thereafter determines based on the positional information 52, along with the information 32, the desired position for each rod surface 92 of one or more of the rods 9 in a vicinity of the user 5, i.e. around the user 5, and instructs the actuator arrangement 20 to perform the corresponding translation motion of the one or more of the rods 9 in the vicinity of the user 5. Thus the rods 9 in the vicinity of the user 5 are altered or dynamically transformed to resemble the virtual environment 4 or to resemble an object in the virtual environment 4.

FIG 11 depicts a flow chart representing a method 100 for dynamically transforming the physical environment 2 of the user 5 to emulate the virtual environment 4. The method 100 is implemented using the system 1 explained in details hereinabove with reference to FIGs 1 to 10. In the method 100, in a step 110 virtual reality rendering data is provided by the VR system 30 to the user 5. The virtual reality rendering data creates the virtual environment 4 that the user 5 experiences. The virtual reality rendering data may be in form of a virtual reality application run on the VR system 30.

In a step 120 the information 32 regarding the virtual environment 4 is provided to the control unit 40. The information 32 is a heightmap, for example a grayscale height elevation map, of the virtual environment 4, as explained hereinabove in reference to FIGs 1 to 10. Thereafter in the method 100, in a step 130 based on the information 32 so received a desired position for each rod surface 32 of one or more of the rods 9 is determined by the control unit 40. Finally in the method 100, in a step 140 the actuator arrangement 20 is instructed by the control unit 40 to perform the corresponding translation motion of the one or more of the rods 9 such that the rod matrix 10 emulates the virtual environment 4.

In an embodiment of the method 100, the method 100 further includes determining, by one or more sensors 50, a position of the user 5 with respect to the rod matrix 10. In this embodiment of the method 100, the step 130 of determining of the desired position for each rod surface 92 of one or more of the rods 9 includes a step 132 of determining the desired position for each rod surface 92 of the one or more of the rods 9 in a vicinity of the user 5 based on the positional information 52. Furthermore, in this embodiment of the method 100, the step 140 of instructing the actuator arrangement 20 to perform the corresponding translation motion of the one or more of the rods 9 includes a step 142 of instructing the actuator arrangement 20 to perform the corresponding translation motion of the one or more of the rods 9 in the vicinity of the user 5.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope and of this invention. The scope of the invention is, therefore, indicated by the following claims rather than by the foregoing description. All changes, modifications, and variations coming within the meaning and range of equivalency of the claims are to be considered within their scope.

## Claims

1. A system (1) for dynamically transforming a physical environment (2) of a user (5) to emulate a virtual environment (4), the system (1) comprising:
- a rod matrix (10) comprising a plurality of rods (9) stacked adjacent to each other such that longitudinal axes (99) of the rods (9) are disposed substantially parallel to each other, wherein each rod (9) has a rod surface (92) substantially perpendicular to the longitudinal axis (99) of the rod (9) and wherein the rod surfaces (92) of the rods (9) when arranged adjacent to each other form a default level plane (90), and wherein each rod (9) is configured to be independently moveable such that the rod surface (92) of the rod (9) moves from the default level plane (90) to different positions along the longitudinal axis (99) of the rod (9) by corresponding translation motions of the rod (9) along the longitudinal axis (99) of the rod (9);
- an actuator arrangement (20) configured to independently move each rod (9) to perform the translation motion of the rod (9) along the longitudinal axis (99) of the rod (9);
- a virtual reality system (30) configure to provide information (32) regarding the virtual environment (4); and
- a control unit (40) configured to receive the information (32) from the virtual reality system (30) and to determine based on the information (32) received a desired position for each rod surface (92) of one or more of the rods (9) and to instruct the actuator arrangement (20) to perform the corresponding translation motion of the one or more of the rods (9) such that the rod matrix (10) emulates the virtual environment (4).

2. The system (1) according to claim 1, wherein the actuator arrangement (20) comprises a plurality of actuators (22), wherein a number of actuators (22) in the plurality of actuators (22) is equal to a number of rods (9) in the plurality of rods (9) and wherein each actuator (22) is functionally coupled to one of the rods (9) and wherein one or more actuators (22) in the plurality of actuators (22) are one of pneumatic, hydraulic, electric and magnetic.

3. The system (1) according to claim 1 or 2, further comprising one or more sensors (50) configured to determine a position of the user (5) with respect to the rod matrix (10) and to provide positional information (52) of the user (5) to the control unit (40), and wherein the control unit (40) is further configured to determine based on the positional information (52) the desired position for each rod surface (92) of one or more of the rods (9) in a vicinity of the user (5) and to instruct the actuator arrangement (20) to perform the corresponding translation motion of the one or more of the rods (9) in the vicinity of the user (5).

4. The system (1) according to any of claims 1 to 3, wherein the information (32) provided by the virtual reality system (30) is a heightmap of the virtual environment (4).

5. The system (1) according to claim 4, wherein the heightmap is a grayscale height elevation map.

6. The system (1) according to any of claims 1 to 5, wherein the virtual reality system (30) is a head mounted virtual reality device.

7. A method (100) for dynamically transforming a physical environment (2) of a user (5) to emulate a virtual environment (4) using a system (1) according to any of claims 1 to 6, wherein the method (100) comprises:
- providing (110) virtual reality rendering data by the virtual reality system (30) to the user (5), wherein the virtual reality rendering data creates the virtual environment (4);
- providing (120) information (32) regarding the virtual environment (4) to the control unit (40),
- determining (130), by the control unit, based on the information (32) received a desired position for each rod surface (92) of one or more of the rods (9); and
- instructing (140) the actuator arrangement (20) to perform the corresponding translation motion of the one or more of the rods (9) such that the rod matrix (10) emulates the virtual environment (4).

8. The method (100) according to claim 7, further comprising:
- determining, by one or more sensors, a position of the user (5) with respect to the rod matrix (10); and
- wherein determining (130), by the control unit, based on the information (32) received the desired position for each rod surface (92) of one or more of the rods (9) includes determining (132) based on the positional information the desired position for each rod surface (92) of one or more of the rods (9) in a vicinity of the user (5); and
- instructing (140) the actuator arrangement (20) to perform the corresponding translation motion of the one or more of the rods (9) such that the rod matrix (10) emulates the virtual environment (4) includes instructing (142) the actuator arrangement (20) to perform the corresponding translation motion of the one or more of the rods (9) in the vicinity of the user (5).

9. The method (100) according to claim 7 or 8, wherein the information (32) provided by the virtual reality system (30) is a heightmap of the virtual environment (4).

10. The method (100) according to claim 9, wherein the heightmap is a grayscale height elevation map.

11. A computer-readable storage media having stored thereon:
- instructions executable by one or more processors of a computer system, wherein execution of the instructions causes the computer system to perform the method (100) according to any one of the claims 7 to 10.

12. A computer program,
- which is being executed by one or more processors of a computer system and performs the method (100) according to one of the claims 7 to 10.
